# EUROPÄISCHE PATENTSCHRIFT

(11) **EP 4 161 810 B1**
(45) Veröffentlichungstag und Bekanntmachung des Hinweises auf die Patenterteilung: **15.11.2023**
(21) Anmeldenummer: 21730143.1
(22) Anmeldetag: 27.05.2021
(51) Int. Cl.: B60T 1/10, B60T 13/58, B62D 63/06, B62D 63/08, F16D 61/00, B60W 30/18

(54) **ACHSE UND VERFAHREN ZUM KOMPENSIEREN EINER VERZÖGERUNG**
AXLE AND METHOD OF COMPENSATING A DECELERATION
AXE ET MÉTHODE DE COMPENSATION DE DÉCÉLÉRATION

(30) Priorität: 04.06.2020 DE 102020114872
(43) Veröffentlichungstag der Anmeldung: 12.04.2023
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2021/064195
(87) Internationale Veröffentlichungsnummer: WO 2021/244937

(56) Entgegenhaltungen:
- DE-A1-102015 221 996
- DE-U1-202018 106 548
- US-A1- 2011 094 807

## Beschreibung

Die vorliegende Erfindung betrifft eine Achse nach dem Oberbegriff des Anspruchs 1, einen Trailer und ein Verfahren zum Kompensieren einer Verzögerung eines ersten Radkopfes.

Im Stand der Technik sind Achsen bekannt, bei denen beide Radköpfe über ein Achsdifferenzial und einen Generator mit einer Rekuperationsvorrichtung verbunden sind. Damit können bei einem Rekuperieren von Rotationsenergie der Radköpfe, beide Radköpfe mit einer gleich großen Verzögerung bzw. einem gleich großen Verzögerungsmoment beaufschlagt werden. Mit einem solchen System kann temporär, beispielsweise während eines Bremsvorgangs, oder auch kontinuierlich Energie zurückgewonnen werden. Da beide Radköpfe mit einer gleich großen Verzögerung beaufschlagt werden, ist sichergestellt, dass die Fahrdynamik eines solchen Fahrzeugs während einer Geradeausfahrt stabil bleibt. Jedoch ist eine solch beidseitig angeschlossene Rekuperationsvorrichtung kostenintensiv und benötigt viel Bauraum. Ferner weist eine solche Lösung ein hohes Gewicht auf. Wird die Rekuperationsvorrichtung einseitig mit nur einem Radkopf verbunden, kann nur ein schwacher Generator eingesetzt werden, da es ansonsten zu fahrdynamischen Problemen kommen kann. Somit kann nur eine geringe Menge an Energie zurückgewonnen werden.

Die US 2011/0094807 A1 zeigt ein Achsaggregat, welches eine Nabenanordnung und eine elektrische Antriebseinheit umfasst. Ferner umfasst das Achsaggregat einen Bremsmechanismus. Eine Steuereinheit ist dazu ausgestaltet, Relativgeschwindigkeiten beider Nabenanordnungen zu erfassen und zwei in der elektrischen Antriebseinrichtung vorgesehene Elektromotoren individuell zu steuern.

Die DE 2020 181 06 548 U1 zeigt eine Fahrzeugsachse, die mit Fahrzeugrädern verbunden ist. Ferner ist ein Generator gezeigt, der über eine Rekuperationsbremse angetrieben werden kann, um elektrische Energie zu erzeugen. Ferner weist die Fahrzeugachse eine Betriebsbremse auf. Ferner ist eine Erfassungseinrichtung vorgesehen, die dazu ausgestaltet ist, einen Schlupf der Fahrzeugräder zu erfassen. Basierend darauf kann ein oder mehrere Generatoren angesteuert werden, um den Schlupf durch entsprechenden elektrisches Antreiben oder elektrisches Bremsen der beaufschlagten Fahrzeugräder zu riegeln.

Die DE 10 2015 221 996 A1 zeigt ein Anbaugerät für eine Landwirtschaftliche Arbeitsmaschine, umfassend mindestens eine elektrische Schnittstelle, mindestens einen Elektromotor und mindestens ein antreibbares Rad, wobei die elektrische Schnittstelle zum Entgegennehmen und/oder Abgeben von elektrischer Leistung ausgebildet ist. Der mindestens eine Elektromotor ist über die mindestens eine elektrische Schnittstelle mit der entgegengenommenen elektrischen Leistung versorgbar.

Daher liegt der vorliegenden Erfindung die Aufgabe zu Grunde, eine Achse, einen Trailer bzw. Nutzfahrzeuganhänger und ein Verfahren zum Kompensieren einer Verzögerung eines ersten Radkopfes einer Achse aufgrund einer Rekuperation , bereitzustellen, die Energie mittels einer Rekuperationsvorrichtung effizient zurückgewinnen können und mit niedrigen Herstellungskosten und geringem Gewicht realisierbar sind.

Das obige Problem wird mit einer Achse mit den Merkmalen des Anspruchs 1, mit einem Trailer bzw. Nutzfahrzeuganhänger mit den Merkmalen des Anspruchs 13 und mit einem Verfahren mit den Merkmalen des Anspruchs 15 gelöst.

Gemäß einem ersten Aspekt der vorliegenden Erfindung wird eine Achse, insbesondere für Nutzfahrzeuge, bereitgestellt, wobei die Achse einen ersten Radkopf und einen zweiten Radkopf, die gegenüberliegend und drehbar an der Achse angeordnet oder anordenbar sind, eine Rekuperationsvorrichtung, die mit dem ersten Radkopf verbunden oder verbindbar ist und dazu ausgestaltet ist, Rotationsenergie des ersten Radkopfes zu rekuperieren, eine Bremsvorrichtung, die dazu ausgestaltet ist, den zweiten Radkopf zu verzögern und eine Steuereinheit, die dazu ausgestaltet ist, Informationen über eine Verzögerung des ersten Radkopfes, die aus der Rekuperation resultiert, und/oder eine Verzögerung des zweiten Radkopfes, zu bestimmen und die Bremsvorrichtung und/oder die Rekuperationsvorrichtung so zu steuern, dass die Verzögerung des ersten Radkopfes und die Verzögerung des zweiten Radkopfes aufeinander abgestimmt sind, umfasst. Bei der Achse kann es sich um eine einstückige oder um eine mehrteilige Achse handeln. Die Achse kann sich kontinuierlich oder bereichsweise entlang einer Rotationsachse erstrecken, welche der Rotationsachse von an der Achse vorgesehenen Rädern entspricht. Ferner können der erste und der zweite Radkopf um die Rotationsachse drehbar sein, insbesondere an der rotationsfest am Nutzfahrzeug bzw. Trailer angeordneten Achse. Bei einer mehrteiligen Achse (das heißt bei einer Achse, die aus mehreren separaten Einzelteilen zusammengesetzt ist), kann die Achse in einem Betriebszustand beispielsweise an einem Nutzfahrzeug oder einem Trailer gebildet sein. Die Radköpfe können separate Bauteile sein, die an der Achse vorgesehen werden können. Die Radköpfe können ein axiales Ende der Achse bilden. Die Radköpfe können Radnaben oder Elemente sein, an denen jeweils eine Felge anordenbar ist. Der Radkopf kann auch als Wheelend bezeichnet werden. Während einem Betrieb eines Fahrzeugs, an dem die erfindungsgemäße Achse vorgesehen ist, das heißt während einer Fahrt, können sich der erste Radkopf und der zweite Radkopf gemeinsam um dieselbe Rotationsachse drehen. Die Rekuperationsvorrichtung kann eine Nutzbremse sein, die dazu ausgestaltet sein kann, Bewegungsenergie in speicherbare elektrische Energie und/oder in eine andere Energieform umzuwandeln. Die Rekuperationsvorrichtung kann dabei verschleißfrei wie beispielsweise eine elektrodynamische Bremse arbeiten. Die Rekuperationsvorrichtung kann eine elektrische Maschine umfassen, die während einem Rekuperationsvorgang als ein Generator arbeiten kann. Die elektrische Maschine kann ein Synchronmotor oder ein Asynchronmotor sein. Während dem Rekuperationsvorgang kann eine Bremswirkung erzeugt werden, indem die elektrische Maschine als elektrischer Generator betrieben wird. Diese Bremswirkung kann in Form einer Verzögerung auf den mit der Rekuperationsvorrichtung verbundenen Radkopf aufgebracht werden. Vorzugsweise ist die Rekuperationsvorrichtung nur mit einem Radkopf der beiden an einer Achse vorgesehenen Radköpfe verbunden. Somit kann Bauraum eingespart werden, da auf ein Differential und eine Verbindung zwischen Rekuperationsvorrichtung und dem anderen Radkopf der Achse verzichtet werden kann. Im Gegensatz zu einer reinen Widerstandsbremse wird die aus der Bewegungsenergie zurückgewonnene elektrische Energie bei der Rekuperationsvorrichtung nicht in Wärme umgewandelt, sondern entweder in einem in dem Fahrzeug vorgehsehen Akkumulator gespeichert oder direkt Verbrauchern zugeführt. Die Bremsvorrichtung kann jede Vorrichtung sein, die dazu ausgestaltet ist, den Radkopf unabhängig von dem anderen an derselben Achse vorgesehenen Radkopf abzubremsen bzw. zu verzögern. Die Bremsvorrichtung kann auch an dem ersten Radkopf angeordnet sein, solange die Bremsvorrichtung den zweiten Radkopf individuell (d.h. unabhängig von dem ersten Radkopf) abbremsen kann. Die Bremsvorrichtung kann beispielsweise Teil einer Feststellbremse sein. Unter Verzögern bzw. Abbremsen kann im vorliegenden Fall eine negative Beschleunigung verstanden werden, die bewirkt, dass sich eine Rotationsgeschwindigkeit des jeweiligen Radkopfes verringert. Die Steuerreinheit kann eine Komparatoreinheit umfassen, die Informationen (beispielsweise Messdaten) empfangen kann und darauf abgestimmte Betätigungsbefehle ausgeben kann. Die Steuereinheit kann mit den Betätigungsbefehlen andere Systeme auf Basis der erlangten Informationen steuern. Dazu kann die Steuereinheit eine Datenverbindung (kabelgebunden oder kabellos) zu dem jeweiligen System aufweisen. Beispielsweise kann als die Steuereinheit eine bereits im Fahrzeug verbaute Steuereinheit verwendet werden. Die Steuereinheit kann so ausgestaltet sein, dass sie die Rekuperationsvorrichtung und/oder die Bremsvorrichtung so steuern kann, dass Verzögerungen, die entweder durch die Bremsvorrichtung oder die Rekuperationsvorrichtung jeweils auf den ersten Radkopf oder den zweiten Radkopf aufbracht werden, aufeinander abgestimmt sind. Aufeinander abgestimmt kann bedeuten, dass ein aus den aufgebrachten Verzögerungen resultierendes Moment einem zuvor bestimmten oder eingestellten Wert und/oder Richtung entspricht. Das resultierende Moment kann auftreten, wenn sich der erste Radkopf schneller dreht als der zweite Radkopf oder anders herum. Dabei kann der sich schneller drehende Radkopf eine größere Strecke zurücklegen als der sich langsamer drehende Radkopf, wie es beispielsweise der Fall ist, wenn ein Fahrzeug, an welchem die Achse verbaut ist, eine Kurve durchfährt. Die Steuereinheit kann die Bremsvorrichtung und/oder die Rekuperationsvorrichtung so steuern, dass sich einer der Radköpfe schneller dreht als der andere, um zu bewirken, dass die Achse ihre Fahrtrichtung ändert, d.h. gelenkt werden kann. Durch eine solche Steuerung, kann eine Kurvenfahrt eines Fahrzeugs, an welchem die Achse vorgesehen ist, unterstützt bzw. erleichtert werden. Ferner kann durch eine solche Steuerung ein Rangieren des Fahrzeugs erleichtert werden. Durch gezielte Verzögerung des ersten Radkopfes und/oder des zweiten Radkopfes kann somit eine Kurvenfahrt oder ein Rangieren vereinfacht werden. Alternativ oder zusätzlich kann die Steuereinheit die Rekuperationsvorrichtung und/oder die Bremsvorrichtung so steuern, dass die Verzögerungen des ersten Radkopfes und des zweiten Radkopfes im Wesentlichen gleich groß sind. Dabei können die Verzögerungen des ersten Radkopfes und des zweiten Radkopfes miteinander verglichen werden und bestimmt werden, ob der Unterschied zwischen beiden Verzögerungen unter einem zuvor bestimmten Wert liegt oder nicht. Somit kann gewährleistet werden, dass das Fahrzeug, an dem die Achse verbaut ist, während einem Verzögerungsvorgang fahrdynamisch stabil bleibt, obwohl die Rekuperationsvorrichtung nur mit einem Radkopf verbunden ist. Damit kann eine einseitige Verzögerung des ersten Radkopfes aufgrund einer Rekuperation von Rotationsenergie des ersten Radkopfes durch gezielte Eingriffe der Bremsvorrichtung an dem zweiten Radkopf im Wesentlichen kompensiert werden, sodass die Fahrdynamik des Fahrzeugs während einem Geradeausfahren nicht negativ beeinflusst ist. Der erste Radkopf und der zweite Radkopf können also unabhängig voneinander verzögert werden. Ferner ist mit der vorliegenden Erfindung ein optimales Gleichgewicht zwischen Energierückgewinnung und Herstellungskosten und verbrauchtem Bauraum erzielbar, sodass die Gesamteffizienz des Fahrzeugs, an dem die Achse verbaut ist, verbessert sein kann. Die Steuereinheit kann Zustandswerte der Achse und/oder des Fahrzeugs erfassen und auf dieser Basis die Rekuperationsvorrichtung und/oder die Bremsvorrichtung so steuern, dass die erfassten Werte (das heißt die Informationen) in einem gewünschten (das heißt in einem beispielsweise voreingestellten) Bereich liegen. In einer Ausführungsform der vorliegenden Erfindung ist es beispielsweise so eingestellt, dass das resultierende Moment möglichst gering ist, sodass bei einer Geradeausfahrt eine optimale Fahrstabilität sichergestellt ist.

Vorzugsweise können die Informationen die Verzögerung bzw. Verzögerungswerte des ersten Radkopfes und/oder des zweiten Radkopfes und/oder ein aufgrund der Verzögerungen erzeugtes Moment umfassen. Das erzeugte Moment kann ein resultierendes Moment sein, das aufgrund einer Verzögerung von zumindest einem der Radköpfe in der Achse erzeugt wird. Die Informationen können Daten sein, die von zumindest einer Erfassungseinrichtung der Steuereinheit zugeführt werden können. Das resultierende Moment kann sich aus der Verzögerung des ersten Radkopfes und der Verzögerung des zweiten Radkopfes ergeben. Die Informationen können durch eigens dafür vorgesehene Sensoren, wie beispielsweise einem Drehzahlsensor und/oder einem Beschleunigungssensor, erlangt werden oder über ein in dem Fahrzeug vorgesehenes System bezogen werden. Beispielsweise kann die Steuereinheit die Informationen von einem ESP-System und/oder ABS-System erlangen.

Die Steuereinheit ist dazu ausgestaltet, die Informationen über die Verzögerung bzw. Verzögerungswerte des ersten Radkopfes basierend auf der rekuperierten Rotationsenergie zu bestimmen. Dazu kann aus der rekuperierten Rotationsenergie die Geschwindigkeit bestimmt werden. Mit Hilfe der bekannten Geschwindigkeit kann zusammen mit einer Zeit die Beschleunigung (das heißt die Verzögerung) bestimmt werden. Somit kann die Steuereinheit dazu ausgestaltet sein, die Verzögerung des ersten Radkopfes auf Basis der rekuperierten Rotationsenergie zu bestimmen. Demgemäß kann ein Sensor zur Messung der zurückgewonnenen Energie an nahezu beliebigen Orten in einem Fahrzeug angeordnet sein, da er räumlich nicht unmittelbar an der Rekuperationsvorrichtung vorgesehen sein muss. Dadurch kann ein Freiheitsgrad bei der Konstruktion erhöht sein. Ferner kann der Sensor an geschützten Positionen vorgesehen sein, wodurch die Zuverlässigkeit des Sensors sichergestellte und dessen Lebensdauer verlängert sein kann.

Die Steuereinheit kann zumindest einen Sensor aufweisen, der dazu ausgestaltet ist, die Informationen zu bestimmen. Der Sensor kann beispielsweise ein Drehzahlsensor sein, der dazu ausgestaltet ist, die Rotation eines Radkopfes oder beider Radköpfe zu messen. Durch Multiplizieren der Drehzahl eines Radkopfes mit dem Umfang einer Lauffläche eines an dem jeweiligen Radkopf montierten Rades kann die Geschwindigkeit bestimmt werden. Aus der Geschwindigkeit (d.h. aus der Geschwindigkeitsänderung) kann die Steuereinheit zusammen mit einer Zeit die Beschleunigung (z.B. die Verzögerung) bestimmen. Somit kann die Steuereinheit mit Hilfe eines Sensors, der beispielsweise die Drehzahl zumindest eines Radkopfes messen kann, die Verzögerung des ersten Radkopfes und/oder des zweiten Radkopfes bestimmen. Ferner können zwei Sensoren vorgesehen sein, die jeweils dem ersten Radkopf und dem zweiten Radkopf zugeordnet sind. Alternativ oder zusätzlich kann auch ein zentraler Sensor angeordnet sein, der ein Beschleunigungssensor sein kann und dazu ausgestaltet sein kann, die Verzögerungen und/oder ein resultierendes Moment direkt zu messen.

Vorzugsweise kann an einem Ende der Achse, an dem der erste Radkopf angeordnet oder anordenbar ist, eine erste Verzögerung aufgrund der Verzögerung des ersten Radkopfes durch die Rekuperationsvorrichtung wirken, an einem anderen Ende der Achse, an dem der zweite Radkopf angeordnet oder anordenbar ist, kann eine zweite Verzögerung aufgrund der Verzögerung des zweiten Radkopfes durch die Bremsvorrichtung wirken, und die Steuereinheit kann ferner dazu ausgestaltet sein, die Bremsvorrichtung und/oder die Rekuperationsvorrichtung so zu steuern, dass das die erste Verzögerung und die zweite Verzögerung kompensiert bzw. ausgeglichen bzw. ausbalanciert sind. Die Verzögerung kann ein Verzögerungsmoment sein, das an dem jeweiligen Radkopf wirken kann. Das Ende der Achse kann ein axiales Außenende der Achse sein. Die erste Verzögerung und die zweite Verzögerung sind zweckmäßigerweise kompensiert, wenn sie im Wesentlichen gleich groß sind. Vorliegend kann im Wesentlichen bedeuten, dass die zweite Verzögerung und die erste Verzögerung gleich groß sind, wenn sie einander mit einer Abweichung von 5% entsprechen. Somit kann sichergestellt werden, dass eine einseitig aufgebrachte Verzögerung bzw. ein daraus resultierendes Moment durch eine gezielte Betätigung der Bremsvorrichtung oder der Rekuperationsvorrichtung kompensiert (das heißt ausgeglichen) werden kann.

Vorzugsweise kann der zumindest eine Sensor dazu ausgestaltet sein, ein Giermoment der Achse und/oder eine Drehzahl des ersten und/oder des zweiten Radkopfes zu bestimmen. Der Sensor kann dabei ein für andere Zwecke bereits im Auto verbauter Sensor (beispielsweise für ein ESP-System) verwendeter Sensor sein. Der Sensor kann eine Gierrate beispielsweise mit mikromechanischen Drehratensensoren, insbesondere auf Silizium-Basis, messen. Vorzugsweise ist der Sensor an oder in dem Schwerpunkt des Fahrzeugs, an welchem die Achse vorgesehen ist, angeordnet. Die Messung der Drehzahl kann mit einem bereits in einem Fahrzeug verbauten ABS-Sensor geschehen. Dabei kann mit Hilfe eines Polrads die Drehzahl des jeweiligen Radkopfes bestimmt werden. Alternativ können für die oben genannten Anwendungen jeweils separate und unabhängige Sensoren vorgesehen sein. Die von den Sensoren bestimmten Messwerte können der Steuereinheit zur Verfügung gestellt werden.

Vorzugsweise kann die Bremsvorrichtung eine mechanische Bremse, insbesondere eine Scheibenbremse oder Trommelbremse, sein. Damit können Bremsvorrichtungen verwendet werden, die üblicherweise in Fahrzeugen, insbesondere in Nutzfahrzeugen, verbaut sind. Es muss lediglich gewährleistet sein, dass die Bremsvorrichtung von der Steuereinheit individuell ansteuerbar ist. Insbesondere kann die Bremsvorrichtung so ansteuerbar sein, dass die Verzögerung des ersten Radkopfes aufgrund der Rekuperation von Rotationsenergie und die Verzögerung des zweiten Radkopfes aufeinander abgestimmt sein können. Die Bremsvorrichtung kann also so ausgestaltet sein, dass der zweite Radkopf individuell und unabhängig von dem ersten Radkopf mittels der Bremsvorrichtung verzögert werden kann.

Vorzugsweise kann der erste Radkopf direkt mit der Rekuperationsvorrichtung verbunden sein, insbesondere ohne ein dazwischenliegendes Differenzial. Die Rekuperationsvorrichtung kann ein Getriebe und eine elektrische Maschine aufweisen. Die elektrische Maschine kann somit über das Getriebe mit dem ersten Radkopf verbunden sein. Insbesondere kann die Rekuperationsvorrichtung mit einer Achswelle mit dem ersten Radkopf verbunden sein. Aufgrund des Anschlusses der Rekuperationsvorrichtung an nur einem Radkopf (d.h. aufgrund des einseitigen Anschlusses der Rekuperationsvorrichtung) bietet sich der Vorteil, dass auf ein Differenzial verzichtet werden kann, wodurch weniger Bauraum um die Achse herum benötigt wird. Somit ist das Achssystem kompakter und weniger schadensanfällig. Darüber hinaus ist das Gewicht der Achse reduziert.

Gemäß einem zweiten Aspekt der vorliegenden Erfindung umfasst ein Trailer bzw. Nutzfahrzeuganhänger zumindest eine der obigen Achsen. Der Trailer kann beispielsweise zwei der obigen Achsen umfassen, wobei beide Achsen so angeordnet sein können, dass die erste Achse den ersten Radkopf auf der in Fahrtrichtung linken Seite des Trailers aufweist und die zweite Achse den ersten Radkopf auf der in Fahrtrichtung rechten Seite des Trailers aufweist. Somit kann die Steuerung vereinfacht werden, und die Steuereinheit kann die Rekuperationsvorrichtung so steuern, dass eine Verzögerung an der ersten Achse mit einer Verzögerung an der zweiten Achse achsübergreifend ausgeglichen werden kann und anders herum. Somit kann eine Verzögerung eines Radkopfes aufgrund einer Rekuperation an der ersten Achse durch eine Verzögerung eines Radkopfes aufgrund einer Rekuperation an der zweiten Achse ausgeglichen werden. Dadurch sind weniger Bremseingriffe der Bremsvorrichtung notwendig, wodurch die Effizienz während dem Betrieb des Trailers gesteigert sein kann.

Gemäß einem dritten Aspekt der vorliegenden Erfindung wird ein Verfahren zum Kompensieren einer Verzögerung eines ersten Radkopfes einer Ache, insbesondere für ein Nutzfahrzeug, wie einen Nutzfahrzeuganhänger, aufgrund einer Rekuperation bereitgestellt, wobei das Verfahren die folgenden Schritte aufweist: Rekuperieren von Rotationsenergie des ersten Radkopfes, Bestimmen von Informationen über die Verzögerung zumindest des ersten Radkopfes und Kompensieren der Verzögerung des ersten Radkopfes durch Verzögern eines zweiten Radkopfes der Achse basierend auf der bestimmten Verzögerung des ersten Radkopfes. Mit dem obigen Verfahren kann eine einseitige Verzögerung, die durch die Beaufschlagung eines Radkopfes mit einem Rekuperationsmoment entsteht, kompensiert werden, so dass eine fahrdynamische Stabilität gewährleistet ist. Die oben in Verbindung mit der Vorrichtung vorgebrachten Vorteile und Ausgestaltungen gelten analog auch für das Verfahren und anders herum.

Weitere Vorteile und Eigenschaften ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsformen können dabei im Rahmen der Erfindung miteinander kombiniert werden. Es zeigen:
- **Fig. 1**: eine Achse aus dem Stand der Technik;
- **Fig. 2**: eine Achse gemäß einer Ausführungsform der vorliegenden Erfindung; und
- **Fig. 3**: die Achse gemäß der Ausführungsform der vorliegen den Erfindung.

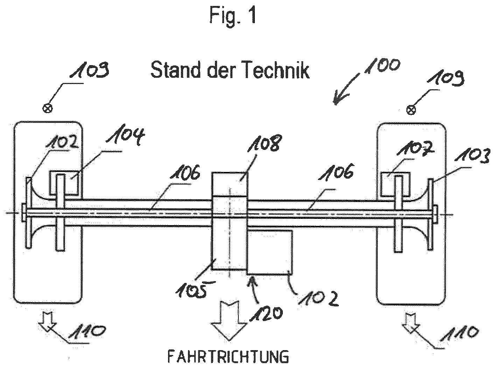

**Fig. 1** zeigt schematisch eine Achse 100 aus dem Stand der Technik. Die Achse 100 weist einen ersten Radkopf 102 und einen zweiten Radkopf 103 auf. An jedem Radkopf 102, 103 ist je eine Bremsvorrichtung 104, 107 zum Verzögern des jeweiligen Radkopfes 102, 103 angeordnet. Ferner weist die Achse 100 eine Rekuperationsvorrichtung 120 auf, die über ein Differenzial 108 mittels einer Achswelle 106 jeweils mit dem ersten Radkopf 102 und mit dem zweiten Radkopf 103 verbunden ist. Die Rekuperationsvorrichtung 120 weist ein Getriebe 105 und eine elektrische Maschine 102 auf. Ferner ist in Figur 1 die Fahrtrichtung mit einem Pfeil angedeutet. Die Pfeile 110 verdeutlichen die Bewegung in der Fahrtrichtung des jeweiligen Radkopfes 102, 103. Während einem Rekuperationsvorgang wird auf beide Radköpfe 102, 103 dieselbe Verzögerung bzw. dasselbe Verzögerungsmoment 109 aufgebracht. Aufgrund des Vorhandenseins des Differentials 108 und zweier Achswellen 106, braucht die in Fig. 1 dargestellte Ache sehr viel Bauraum und ist teuer.

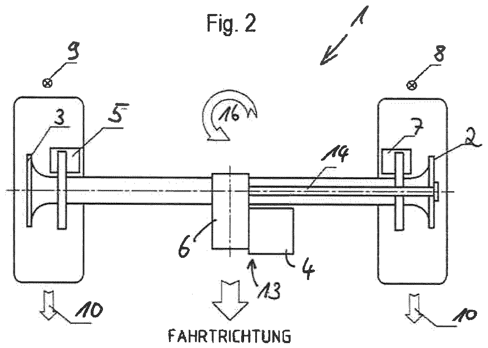

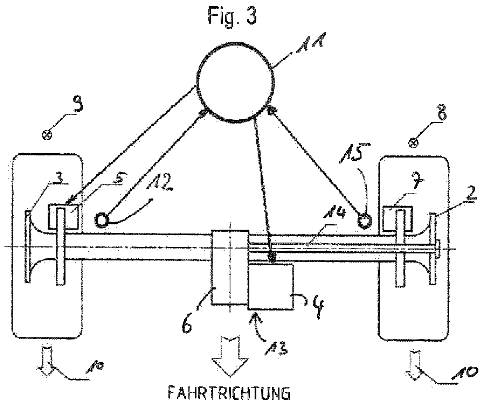

**Fig. 2** zeigt schematisch eine Achse 1 gemäß einer Ausführungsform der vorliegenden Erfindung. Die Achse 1 umfasst einen ersten Radkopf 2 und einen zweiten Radkopf 3. Der erste Radkopf 2 und der zweite Radkopf 3 bilden jeweils ein axiales Ende der Achse 1. Der erste Radkopf 2 und der zweite Radkopf 3 sind jeweils Teil einer Radnabe, die sich zusammen mit der Achse 1 um eine Rotationsachse der Achse 1 dreht. An den Radköpfen 2, 3 können jeweils eine Felge montiert werden. Die Achse 1 weist ferner eine Rekuperationsvorrichtung 13 auf, die ein Getriebe 6 und eine elektrische Maschine 4 aufweist. Die Rekuperationsvorrichtung 13 ist mittels einer Achswelle 14 direkt mit dem ersten Radkopf 2 verbunden. Genauer gesagt ist die Rekuperationsvorrichtung 13 lediglich (d.h. ausschließlich) mit dem ersten Radkopf 2 verbunden. Ferner weist die Achse 1 Bremsvorrichtungen 5, 7 auf, die jeweils einem der Radköpfe 2, 3 zugeordnet sind und den jeweiligen Radkopf 2, 3 verzögern können. Die Bremsvorrichtung 5 kann den zweiten Radkopf 3 individuell verzögern. Mit anderen Worten kann die Bremsvorrichtung 5 eine Verzögerung 9 an dem zweiten Radkopf 3 bewirken. Demgegenüber kann die Rekuperationsvorrichtung 13 eine Verzögerung 8 an dem ersten Radkopf 2 erzeugen. Eine in Fig. 2 nicht dargestellte Steuereinheit steuert die Rekuperationsvorrichtung 13 und/oder die Bremsvorrichtung 5 so, dass die Verzögerung des ersten Radkopfes 2, die aus der Rekuperation resultiert, und die Verzögerung des zweiten Radkopfes 3, die aus der Verzögerung mittels der Bremsvorrichtung 5 resultiert, im Wesentlichen gleich groß sind, sodass die Bewegungen 10 in Fahrtrichtung im Wesentlichen gleich groß sind. Somit kann bei einer Geradeausfahrt eine fahrdynamische Stabilisierung der Achse 1 erzielt werden. Anders ausgedrückt ist ein resultierendes Moment 16, das beispielweise um den Mittelpunkt der Achse 1 dreht, im Wesentlichen gleich Null. In einem Fall, bei dem die von der Bremsvorrichtung bewirkte Verzögerung 9 und die von der Rekuperationsvorrichtung bewirkte Verzögerung 8 nicht gleich groß sind, ist auch das resultierende Moment 16 nicht gleich null, sondern entspricht einem Betrag größer als null. Dadurch kann das Fahrzeug, an welchem die Achse 1 vorgesehen ist, fahrdynamisch instabil werden. In einer weiteren nicht dargestellten Ausführungsform kann die fahrdynamische Instabilität genutzt werden, um eine Kurvenfahrt und/oder eine Rangieren eines Fahrzeuges, an welchem die Achse 1 verbaut ist, zu verbessern. Dabei wird die Steuereinheit 11 (siehe Fig. 3) gezielt so gesteuert, dass die Bewegungen 10 des ersten Radkopfes 2 und des zweiten Radkopfes 3 nicht gleich groß sind. Dabei ist das resultierende Moment 16 nicht null. Somit kann die Achse 1 auf eine Kurvenbahn gedrängt werden.

**Fig. 3** zeigt die Achse 1 zusammen mit einer schematischen schematisch Darstellung der Informationsflüsse. So ist in Fig. 3 die Steuereinheit 11 dargestellt, die Informationen bzw. Messwerte von Sensoren 12 und 15 erlangt. Die Steuervorrichtung 11 gibt Steuerbefehle zu der Bremsvorrichtung 5 und zu der Rekuperationsvorrichtung 13 aus. Bei der vorliegenden Ausführungsform ist der erste Sensor 15 dem ersten Radkopf 2 zugeordnet und der zweite Sensor 12 ist dem zweiten Radkopf 3 zugeordnet. Der erste Sensor 15 bestimmt beispielsweise die durch die Rekuperationsvorrichtung 13 zurückgewonnene Energie. Der zweite Sensor 12 bestimmt dagegen die Drehzahl des zweiten Radkopfes 3. Bei einer weiteren nicht dargestellten Ausführungsform bestimmt der erste Sensor 15 ebenfalls die Drehzahl des ersten Radkopfes 2. In einer weiteren nicht dargestellten Ausführungsform ist lediglich ein einzelner Sensor angeordnet, der die Steuervorrichtung 11 mit Informationen, insbesondere mit Informationen über ein Giermoment der Achse 1 bzw. des Fahrzeuges, in welchem die Achse vorgesehen ist, versorgt. Die Steuereinheit 11 ist eine Komparatoreinheit, die Informationen, die sie aufnimmt, bestimmten Betätigungsbefehlen zuordnet und diese ausgibt. Insbesondere gibt die Steuereinheit 11 Steuerbefehle zu der Bremsvorrichtung 5 und zu der Rekuperationsvorrichtung 13 aus. Somit kann die Steuervorrichtung 11 durch gezielte Betätigung der Bremsvorrichtung 5 dafür sorgen, dass die Verzögerung 9 aufgrund einer Verzögerung des zweiten Radkopfes 3 im Wesentlichen gleich groß ist wie die Verzögerung 8 aufgrund einer Rekuperation von Rotationsenergie des ersten Radkopfes 2. Folglich kann gewährleistet werden, dass die Bewegung 10 beider Radköpfe 2,3 im Wesentlichen gleich groß ist und somit die Fahrdynamik der Achse 1 während einer Geradeausfahrt stabil ist. Zusätzlich kann durch gezielte Steuerung der Rekuperationsvorrichtung 13 und/oder der Bremsvorrichtung 5 durch die Steuereinheit 11 bewirkt werden, dass die Bewegung 10 in Fahrtrichtung des ersten Radkopfes 2 und des zweiten Radkopfes 3 nicht gleich groß sind, wodurch die Achse aufgrund der Steuerung der Steuereinheit 11 dazu gebracht werden kann, sich entlang einer Kurvenbahn zu bewegen. Mit anderen Worten kann ein Lenkvorgang durch die Steuerung unterstützt werden.

### Bezugszeichenliste

- 1: Achse
- 2: erster Radkopf
- 3: zweiter Radkopf
- 4: elektrische Maschine
- 5,7: Bremsvorrichtung
- 6: Getriebe
- 8: Verzögerung durch die Rekuperationsvorrichtung
- 9: Verzögerung durch die Bremsvorrichtung
- 10: Bewegung in Fahrtrichtung
- 11: Steuereinheit
- 12: zweiter Sensor
- 13: Rekuperationsvorrichtung
- 14: Achswelle
- 15: erster Sensor
- 16: resultierendes Moment

## Patentansprüche

1. Achse (1), insbesondere für Nutzfahrzeuge, umfassend:
einen ersten Radkopf (2) und einen zweiten Radkopf (3), die gegenüberliegend und drehbar an der Achse (1) angeordnet oder anordenbar sind,
eine Rekuperationsvorrichtung (13), die mit dem ersten Radkopf (2) verbunden oder verbindbar ist und dazu ausgestaltet ist, Rotationsenergie des ersten Radkopfes (2) zu rekuperieren,
eine Bremsvorrichtung (5), die dazu ausgestaltet ist, den zweiten Radkopf (3) zu verzögern, und
eine Steuereinheit (11), die dazu ausgestaltet ist, Informationen über eine Verzögerung des ersten Radkopfes (2), die aus der Rekuperation resultiert, und/oder eine Verzögerung des zweiten Radkopfes (3), zu bestimmen und die Bremsvorrichtung (5) und/oder die Rekuperationsvorrichtung (13) so zu steuern, dass die Verzögerung des ersten Radkopfes (2) und die Verzögerung des zweiten Radkopfes (3) aufeinander abgestimmt sind,
**dadurch gekennzeichnet, dass** die Steuereinheit (11) dazu ausgestaltet ist, die Informationen über die Verzögerung des ersten Radkopfes (2) basierend auf der rekuperierten Rotationsenergie zu bestimmen.

2. Achse (1) gemäß Anspruch 1, wobei die Informationen über die Verzögerung des ersten Radkopfes (2) und/oder des zweiten Radkopfes (3) ein aufgrund der Verzögerungen erzeugtes Moment (16) umfassen.

3. Achse (1) gemäß einem der vorhergehenden Ansprüche, wobei die Steuereinheit (11) zumindest einen Sensor (12) aufweist, der dazu ausgestaltet ist, die Informationen zu bestimmen.

4. Achse (1) gemäß Anspruch 3, wobei der zumindest eine Sensor (12) dazu ausgestaltet ist, ein Giermoment der Achse (1) und/oder eine Drehzahl des ersten Radkopfes (2) und/oder des zweiten Radkopfes (3) zu bestimmen.

5. Achse (1) gemäß einem der vorhergehenden Ansprüche,
wobei an einem Ende der Achse (1), an dem der erste Radkopf (2) angeordnet oder anordenbar ist, eine erste Verzögerung (8) aufgrund der Verzögerung des ersten Radkopfes (2) durch die Rekuperationsvorrichtung (13) wirken kann,
wobei an einem anderen Ende der Achse (1), an dem der zweite Radkopf (3) angeordnet oder anordenbar ist, eine zweite Verzögerung (9) aufgrund der Verzögerung des zweiten Radkopfes (3) durch die Bremsvorrichtung (5) wirken kann, und
wobei die Steuereinheit (11) ferner dazu ausgestaltet ist, die Bremsvorrichtung (5) und/oder die Rekuperationsvorrichtung (13) so zu steuern, dass das die erste Verzögerung (8) und die zweite Verzögerung (9) im Wesentlichen gleich groß sind.

6. Achse (1) gemäß einem der vorhergehenden Ansprüche, wobei die Bremsvorrichtung (5) dazu ausgestaltet ist, den zweiten Radkopf (3) individuell und unabhängig von dem ersten Radkopf (2) zu verzögern.

7. Achse (1) gemäß einem der vorhergehenden Ansprüche, wobei die Rekuperationsvorrichtung (13) lediglich mit dem ersten Radkopf (2) verbunden ist.

8. Achse (1) gemäß einem der vorhergehenden Ansprüche, wobei die Steuereinheit ferner dazu ausgestaltet ist, die Bremsvorrichtung (5) und/oder die Rekuperationsvorrichtung (13) so steuern, dass sich einer der Radköpfe (2,3) schneller dreht als der andere.

9. Achse (1) gemäß einem der vorhergehenden Ansprüche, wobei die Rekuperationsvorrichtung (13) über ein Getriebe (6) mit dem ersten Radkopf (2) verbunden ist.

10. Achse (1) gemäß einem der Ansprüche 1 bis 8, wobei der erste Radkopf (2) direkt mit der Rekuperationsvorrichtung (13) verbunden ist, insbesondere ohne ein dazwischengeschaltetes Differential.

11. Achse (1) gemäß einem der vorhergehenden Ansprüche, wobei die Bremsvorrichtung (5) eine mechanische Bremse, insbesondere eine Scheibenbremse oder Trommelbremse, ist.

12. Nutzfahrzeuganhänger mit zumindest einer Achse (1) gemäß einem der vorhergehenden Ansprüche.

13. Nutzfahrzeuganhänger gemäß Anspruch 12,
wobei der Nutzfahrzeuganhänger zumindest zwei Achsen (1) umfasst,
wobei die zumindest zwei Achsen (1) so an dem Nutzfahrzeuganhänger angeordnet sind, dass die erste Achse (1) den ersten Radkopf (2) auf der in Fahrtrichtung linken Seite des Nutzfahrzeuganhängers aufweist und die zweite Achse (1) den ersten Radkopf (2) auf der in Fahrtrichtung rechten Seite des Nutzfahrzeuganhängers aufweist.

14. Verfahren zum Kompensieren einer Verzögerung eines ersten Radkopfes (2) einer Achse (1), insbesondere für ein Nutzfahrzeug, aufgrund einer Rekuperation, wobei das Verfahren die folgenden Schritte aufweist:
Rekuperieren von Rotationsenergie des ersten Radkopfes (2),
Bestimmen von Informationen über die Verzögerung zumindest des ersten Radkopfes (2), und
Kompensieren der Verzögerung des ersten Radkopfes (2) durch Verzögern eines zweiten Radkopfes (3) der Achse (1) basierend auf der bestimmten Verzögerung des ersten Radkopfes (2),
**dadurch gekennzeichnet, dass** die Informationen über die Verzögerung des ersten Radkopfes (2) basierend auf der rekuperierten Rotationsenergie bestimmt werden.

## Claims

1. Axle (1), in particular for commercial vehicles, comprising:
a first wheel head (2) and a second wheel head (3) which are or can be arranged opposite one another and rotatably on the axle (1),
a recuperation device (13) connected or connectable to the first wheel head (2) and adapted to recuperate rotational energy of the first wheel head (2), a braking device (5) adapted to decelerate the second wheel head (3), and a control unit (11) which is designed to determine information about a deceleration of the first wheel head (2) resulting from the recuperation and/or a deceleration of the second wheel head (3) and to control the braking device (5) and/or the recuperation device (13) in such a way that the deceleration of the first wheel head (2) and the deceleration of the second wheel head (3) are matched to one another,
**characterised in that** the control unit (11) is arranged to determine the information on the deceleration of the first wheel head (2) based on the recuperated rotational energy.

2. Axle (1) according to claim 1, wherein the information about the deceleration of the first wheel head (2) and/or the second wheel head (3) comprises a torque (16) generated due to the decelerations.

3. An axle (1) according to any one of the preceding claims, wherein said control unit (11) comprises at least one sensor (12) adapted to determine said information.

4. Axle (1) according to claim 3, wherein the at least one sensor (12) is designed to determine a yaw moment of the axle (1) and/or a rotational speed of the first wheel head (2) and/or the second wheel head (3).

5. Axle (1) according to one of the preceding claims,
wherein at one end of the axle (1), at which the first wheel head (2) is arranged or can be arranged, a first deceleration (8) can take effect due to the deceleration of the first wheel head (2) by the recuperation device (13),
wherein at another end of the axle (1), at which the second wheel head (3) is or can be arranged, a second deceleration (9) can act due to the deceleration of the second wheel head (3) by the braking device (5), and
wherein the control unit (11) is further adapted to control the braking device (5) and/or the recuperation device (13) such that the first deceleration (8) and the second deceleration (9) are substantially equal.

6. Axle (1) according to one of the preceding claims, wherein the braking device (5) is designed to decelerate the second wheel head (3) individually and independently of the first wheel head (2).

7. Axle (1) according to any of the preceding claims, wherein the recuperation device (13) is only connected to the first wheel head (2).

8. An axle (1) according to any one of the preceding claims, wherein the control unit is further adapted to control the braking device (5) and/or the recuperation device (13) so that one of the wheel heads (2,3) rotates faster than the other.

9. Axle (1) according to one of the preceding claims, wherein the recuperation device (13) is connected to the first wheel head (2) via a gear (6).

10. Axle (1) according to one of the claims 1 to 8, wherein the first wheel head (2) is directly connected to the recuperation device (13), in particular without an interposed differential.

11. Axle (1) according to one of the preceding claims, wherein the braking device (5) is a mechanical brake, in particular a disc brake or drum brake.

12. Commercial vehicle trailer with at least one axle (1) according to one of the preceding claims.

13. A commercial vehicle trailer according to claim 12,
wherein the commercial vehicle trailer comprises at least two axles (1),
wherein the at least two axles (1) are arranged on the commercial vehicle trailer in such a way that the first axle (1) has the first wheel head (2) on the left-hand side of the commercial vehicle trailer in the direction of travel and the second axle (1) has the first wheel head (2) on the right-hand side of the commercial vehicle trailer in the direction of travel.

14. A method of compensating for deceleration of a first wheel head (2) of an axle (1), in particular for a commercial vehicle, due to recuperation, the method comprising the following steps:
Recuperating rotational energy of the first wheel head (2),
determining information on the deceleration of at least the first wheel head (2), and
compensating the deceleration of the first wheel head (2) by decelerating a second wheel head (3) of the axle (1) based on the determined deceleration of the first wheel head (2),
**characterised in that** the information on the deceleration of the first wheel head (2) is determined based on the recuperated rotational energy.

## Revendications

1. Essieu (1), en particulier pour véhicules utilitaires, comprenant :
une première tête de support de roue (2) et une deuxième tête de support de roue (3), qui sont disposées ou peuvent être disposées sur l'essieu (1) à l'opposé l'une de l'autre et de manière à pouvoir tourner,
un dispositif de récupération (13) qui est relié ou peut être relié à la première tête de support de roue (2) et qui est conçu pour récupérer l'énergie de rotation de la première tête de support de roue (2),
un dispositif de freinage (5) qui est conçu pour décélérer la deuxième tête de support de roue (3), et
une unité de commande (11) qui est conçue pour déterminer des informations relatives à une décélération de la première tête de support de roue (2), résultant de la récupération, et/ou à une décélération de la deuxième tête de support de roue (3), et pour commander le dispositif de freinage (5) et/ou le dispositif de récupération (13) de telle sorte que la décélération de la première tête de support de roue (3) et la décélération de la deuxième tête de support de roue (3) soient adaptées l'une à l'autre,
**caractérisé en ce que**
l'unité de commande (11) est conçue pour déterminer les informations relatives à la décélération de la première tête de support de roue (2) en se basant sur l'énergie de rotation récupérée.

2. Essieu (1) selon la revendication 1,
dans lequel les informations relatives à la décélération de la première tête de support de roue (2) et/ou de la deuxième tête de support de roue (3) incluent un couple (16) généré en raison des décélérations.

3. Essieu (1) selon l'une des revendications précédentes,
dans lequel l'unité de commande (11) comprend au moins un capteur (12) conçu pour déterminer lesdites informations.

4. Essieu (1) selon la revendication 3,
dans lequel ledit au moins un capteur (12) est conçu pour déterminer un couple de lacet de l'essieu (1) et/ou une vitesse de rotation de la première tête de support de roue (2) et/ou de la deuxième tête de support de roue (3).

5. Essieu (1) selon l'une des revendications précédentes,
dans lequel, à une extrémité de l'essieu (1) où la première tête de support de roue (2) est disposée ou peut être disposée, une première décélération (8) peut se produire en raison de la décélération de la première tête de support de roue (2) par le dispositif de récupération (13),
à une autre extrémité de l'essieu (1) où la deuxième tête de support de roue (3) est disposée ou peut être disposée, une deuxième décélération (9) peut se produire en raison de la décélération de la deuxième tête de support de roue (3) par le dispositif de freinage (5), et
l'unité de commande (11) est en outre conçue pour commander le dispositif de freinage (5) et/ou le dispositif de récupération (13) de manière à ce que la première décélération (8) et la deuxième décélération (9) soient sensiblement de la même ampleur.

6. Essieu (1) selon l'une des revendications précédentes,
dans lequel le dispositif de freinage (5) est conçu pour décélérer la deuxième tête de support de roue (3) individuellement et indépendamment de la première tête de support de roue (2).

7. Essieu (1) selon l'une des revendications précédentes,
dans lequel le dispositif de récupération (13) est relié uniquement à la première tête de support de roue (2).

8. Essieu (1) selon l'une des revendications précédentes,
dans lequel l'unité de commande est en outre conçue pour commander le dispositif de freinage (5) et/ou le dispositif de récupération (13) de sorte que l'une des têtes de support de roue (2, 3) tourne plus vite que l'autre.

9. Essieu (1) selon l'une des revendications précédentes,
dans lequel le dispositif de récupération (13) est relié à la première tête de support de roue (2) par l'intermédiaire d'un mécanisme (6).

10. Essieu (1) selon l'une des revendications 1 à 8,
dans lequel la première tête de support de roue (2) est reliée directement au dispositif de récupération (13), en particulier sans différentiel interposé.

11. Essieu (1) selon l'une des revendications précédentes,
dans lequel le dispositif de freinage (5) est un frein mécanique, en particulier un frein à disque ou un frein à tambour.

12. Remorque de véhicule utilitaire comportant au moins un essieu (1) selon l'une des revendications précédentes.

13. Remorque de véhicule utilitaire selon la revendication 12,
dans laquelle la remorque de véhicule utilitaire comprend au moins deux essieux (1),
lesdits au moins deux essieux (1) sont disposés sur la remorque de véhicule utilitaire de telle sorte que le premier essieu (1) comprend la première tête de support de roue (2) sur le côté gauche de la remorque de véhicule utilitaire dans le sens de circulation et que le deuxième essieu (1) comprend la première tête de support de roue (2) sur le côté droit de la remorque de véhicule utilitaire dans le sens de circulation.

14. Procédé de compensation d'une décélération d'une première tête de support de roue (2) d'un essieu (1), en particulier pour un véhicule utilitaire, en raison d'une récupération, le procédé comprenant les étapes suivantes consistant à :
récupérer l'énergie de rotation de la première tête de support de roue (2),
déterminer des informations relatives à la décélération d'au moins la première tête de support de roue (2), et
compenser la décélération de la première tête de support de roue (2) en décélérant une deuxième tête de support de roue (3) de l'essieu (1) sur la base de la décélération déterminée de la première tête de support de roue (2),
**caractérisé en ce que**
les informations relatives à la décélération de la première tête de support de roue (2) sont déterminées sur la base de l'énergie de rotation récupérée.
